# FASCICULE DE BREVET EUROPEEN

(11) **EP 2 200 946 B1**
(45) Date de publication et mention de la délivrance du brevet: **06.03.2013**
(21) Numéro de dépôt: 08837682.7
(22) Date de dépôt: 18.09.2008
(51) Int. Cl.: C03B 25/08, C03B 27/04, C03B 27/044, C03B 29/08, F27D 7/04

(54) **FOUR ET PROCÉDÉ DE TREMPE COMPORTANT PLUSIEURS DISPOSITIFS DE SOUFFLAGE D'UN FLUIDE SUR UNE FACE D'UN ELEMENT MINCE DE TYPE VITRAGE**
OFEN UND VERFAHREN ZUM TEMPERN UMFASSEND MEHRE VORRICHTUNGEN ZUM BLASEN EINER FLÜSSIGKEIT AUF DIE VORDERSEITE EINES DÜNNEN GLASELEMENTS
TEMPERING FURNACE AND METHOD COMPRISING SEVERAL DEVICES FOR BLOWING A FLUID ON THE FACE OF A THIN MEMBER OF THE GLAZING TYPE

(30) Priorité: 18.09.2007 FR 0757656
(43) Date de publication de la demande: 30.06.2010
(73) Titulaire: SAINT-GOBAIN SEVA, 71105 Chalon-sur-Saône (FR)
(72) Inventeur: BRIS, Jean-Jacques, F-71620 Bey (FR); OUDIN, Philippe, F-71380 Epervans (FR)
(74) Mandataire: Jamet, Vincent
(86) Numéro de dépôt international: PCT/FR2008/051671
(87) Numéro de publication internationale: WO 2009/047450

(56) Documents cités:
- DE-A1- 3 536 155
- DE-A1- 4 219 003
- DE-A1- 19 538 364
- DE-A1-102005 062 584
- JP-A- 2005 097 033

## Description

La présente invention se rapporte à un four de trempe comportant plusieurs dispositifs de soufflage d'un fluide sur au moins une face d'un élément mince de type vitrage.

Un tel dispositif de soufflage est utilisé dans l'industrie verrière pour réaliser le bombage et/ou la trempe de vitrages.

Ce dispositif comporte d'une manière habituelle à l'intérieur d'une enceinte ayant un axe horizontal central correspondant à l'axe central de défilement de l'élément mince, un ventilateur à flux radial et à axe vertical ayant une sortie reliée à au moins un conduit alimentant au moins un orifice de soufflage dirigé vers ladite face et réalisant une largeur de soufflage selon un axe transversal horizontal perpendiculaires à l'axe vertical du ventilateur et à l'axe horizontal central de défilement.

Il est connu de la demande internationale de brevet N° WO 02/068349, un dispositif du type ci-dessus.

Ce document expose que le soufflage doit être symétrique par rapport à l'axe horizontal central de défilement et que pour réaliser ce soufflage symétrique, les moyens de soufflage doivent être disposés de manière symétrique par rapport à l'axe horizontal central de défilement (ou au plan vertical central).

Ce document expose ainsi que deux ventilateurs à flux radial peuvent être disposés en voute de l'enceinte, d'une manière symétrique par rapport au plan vertical central, chaque ventilateur comportant au moins un conduit d'alimentation radial et les deux conduits étant alors disposés symétriquement par rapport au plan vertical central.

Ce document expose aussi qu'un seul ventilateur à flux radial peut être disposé en voute de l'enceinte, mais que ce ventilateur est alors disposé au centre de la largeur de l'enceinte, ce ventilateur comportant alors au moins deux conduits d'alimentation radiale et ces deux conduits étant alors disposés symétriquement par rapport au plan vertical central.

Cette solution donne techniquement satisfaction car elle permet effectivement de réaliser une répartition homogène du flux d'air à la surface des éléments minces qui défilent à l'intérieur de l'enceinte, mais il est apparu que cela conduisait à une élévation du coût et à une complexification de l'équipement en particulier parce qu'il faut prévoir deux systèmes d'instrumentation différents pour régler les flux gauche et droit (par rapport à l'axe horizontal central de défilement) pour permettre de réaliser la répartition homogène du flux d'air.

Un autre inconvénient du dispositif de soufflage de l'art antérieur réside dans le fait que les moyens de chauffage qui sont disposés dans le conduit sont supportés par des parois latérales de l'enceinte. Il est alors difficile de procéder au retrait de ces moyens, notamment pour les nettoyer ou pour les inspecter.

L'art antérieur connaît aussi de la demande de brevet JP 2005097033 un dispositif de soufflage selon le préambule de la revendication 1. Dans ce dispositif, l'axe vertical du ventilateur est parfois décalé le long de l'axe horizontal central de l'enceinte (cf. figures 9 d-9f de ce document) mais l'axe vertical du ventilateur est toujours centré par rapport à la largeur de soufflage délimitée par l'orifice de soufflage.

L'art antérieur connaît par ailleurs de la demande de brevet DE 42 19 003 un dispositif de soufflage selon le préambule de la revendication 1 dont l'axe vertical du ventilateur est décalé par rapport à l'axe horizontal central de l'enceinte de telle sorte que cet axe vertical du ventilateur est en limite de la largeur de soufflage délimitée par l'orifice de soufflage, voire en-dehors de cette largeur de soufflage.

Le but de l'invention est de pallier les inconvénients de l'art antérieur en proposant un système de soufflage qui permet de réaliser une répartition homogène du flux d'air comme précédemment mais comportant moins de moyens et moins d'instruments et coutant ainsi moins cher.

La présente invention se rapporte ainsi dans son acception la plus large à un four de trempe comportant plusieurs dispositifs de soufflage d'un fluide sur au moins une face d'un élément mince de type vitrage selon la revendication 1.

Ces dispositifs comportent, à l'intérieur d'une enceinte ayant un axe horizontal central correspondant à l'axe central de défilement de l'élément mince, un ventilateur à flux radial et à axe vertical ayant une sortie reliée à au moins un conduit alimentant au moins un orifice de soufflage dirigé vers ladite face et réalisant une largeur de soufflage selon un axe transversal horizontal perpendiculaire à l'axe vertical du ventilateur et perpendiculaire à l'axe horizontal central de défilement.

Ces dispositifs esont remarquables en ce qu'ils comportent un seul ventilateur dans chaque plan vertical comprenant l'axe vertical du ventilateur et perpendiculaire à l'axe horizontal central et en ce que l'axe vertical du ventilateur est disposé à une distance de l'axe horizontal central comprise entre 25 % et 42,5 % de cette largeur de soufflage, c'est-à-dire à une distance comprise entre un quart et un septième de cette largeur de soufflage, en partant de l'axe horizontal central.

Le conduit qui relie la sortie du ventilateur à l'orifice de soufflage est orienté, pour l'essentiel, transversalement par rapport à l'axe central de défilement.

Dans ce dispositif en outre, de préférence, l'axe vertical dudit ventilateur est disposé à une distance de l'axe horizontal central égal à environ un tiers (+ ou - 5 %) de la largeur de soufflage.

Des moyens de chauffage sont disposés dans ledit conduit et sont, de préférence, supportés par la voute de ladite enceinte, tout comme le ventilateur, afin de faciliter leur entretien : ils peuvent être séparés de l'enceinte et soulevés, par exemple à l'aide d'un treuil ou d'un palan. Par ailleurs, cela permet d'éviter que des connexions ou câbles électriques soient présents sur les faces latérales extérieures du dispositif.

Le dispositif selon l'invention comporte par ailleurs au moins un orifice de soufflage comportant, de préférence, une plaque présentant en coupe selon l'axe horizontal central sensiblement une forme de double U, cette plaque présentant une pluralité de trous situés au fond des U. Ces trous sont orientés sensiblement verticalement, c'est-à-dire perpendiculairement à la surface principale de l'élément mince à chauffer.

Les deux U sont, de préférence, reliés par un élément de plaque en forme de V inversé.

La présente invention se rapporte ainsi à un four de trempe comportant plusieurs dispositifs de soufflage ces dispositifs étant alignés de manière à ce que leurs axes horizontaux centraux coïncident.

Tous les ventilateurs des dispositifs de soufflage sont alors disposés du même côté de l'axe horizontal central commun, afin de faciliter la maintenance.

La présente invention ne s'applique pas uniquement aux éléments minces plats, mais aussi aux éléments courbés ou bombés. Elle peut notamment être utilisée pour réaliser la trempe de vitres en verre monolithiques.

La présente invention se rapporte également à un procédé de soufflage selon la revendication 6, mettant en oeuvre en particulier le four de trempe à plusieurs dispositifs selon l'invention, dans lequel le soufflage est opéré sur au moins une face d'un élément mince de type vitrage, l'élément mince défilant à l'intérieur d'une enceinte selon un axe horizontal central, un ventilateur à flux radial et à axe vertical ayant une sortie reliée à au moins un conduit alimentant au moins un orifice de soufflage dirigé vers ladite face et réalisant une largeur de soufflage selon un axe transversal horizontal perpendiculaires à l'axe vertical du ventilateur et à l'axe horizontal central de défilement.

Ce procédé de soufflage d'un fluide est remarquable en ce qu'un seul ventilateur dans chaque plan vertical comprenant l'axe vertical du ventilateur et perpendiculaire à l'axe horizontal central souffle et en ce que l'axe vertical dudit ventilateur est disposé à une distance de l'axe horizontal central comprise entre 25 % et 42,5 % de cette largeur de soufflage.

Avantageusement, le dispositif et le procédé selon l'invention permettent ainsi de réaliser une répartition homogène du flux d'air à la surface des éléments minces en utilisant un seul ventilateur et un seul moyen de chauffage.

Avantageusement également, ce moyen de chauffage est disposé en partie supérieure de l'enceinte (en voute) et est ainsi facile d'accès.

Avantageusement également, le coût du dispositif, ainsi que son poids, sont diminués parce que moins de moyens sont nécessaires pour la réalisation du flux d'air chaud (moins de tôle métallique pour réaliser les conduits, moins d'instrumentation pour régler les deux côtés du soufflage).

Avantageusement enfin, le fonctionnement du dispositif est simplifié et il est même en outre possible de mieux gérer le chauffage et de supprimer l'apparition de points chauds en voute.

La présente invention sera mieux comprise à la lecture de la description détaillée ci-après d'exemples de réalisation non limitatifs et des figures ci-jointes :
- La figure 1 illustre une vue en coupe longitudinale partielle dans un plan longitudinal passant par l'axe de rotation d'un ventilateur d'un dispositif de soufflage selon l'invention ;
- La figure 2 illustre une vue en coupe transversale selon AA de la figure 1, dans le plan P comprenant l'axe vertical du ventilateur et perpendiculaire à l'axe central horizontal de défilement ;
- La figure 3 illustre une vue de dessus d'un dispositif de soufflage selon l'invention ; et
- La figure 4 illustre une vue en coupe de détail d'un orifice de soufflage.

Il est précisé que dans ces figures les proportions entre les divers éléments représentés ne sont pas rigoureusement respectées et les éléments de coupe dans le plan ou en arrière plan ne sont pas toujours représentés, afin d'en faciliter la lecture.

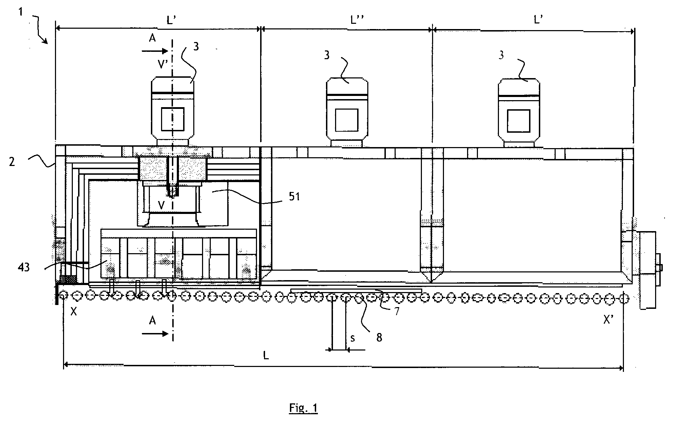

La figure 1 illustre une vue en coupe longitudinale partielle d'un four de trempe selon l'invention comportant trois dispositifs 1 de soufflage d'un fluide, en l'occurrence de l'air, sur au moins une face d'un élément mince 7 de type vitrage (un seul dispositif étant représenté en coupe, le premier dans le sens de défilement de l'élément mince), ces dispositifs 1 étant positionnés l'un à la suite de l'autre le long d'un axe XX' horizontal central correspondant à l'axe central de défilement de l'élément mince à l'intérieur des trois dispositifs.

L'élément mince 7 a été représenté dans le deuxième dispositif de soufflage pour plus de clarté. Il est entré dans le four par la gauche de la figure et en ressort par la droite.

L'élément mince 7 se déplace perpendiculairement au plan de coupe, sur des rouleaux 8 parallèles entre eux, de tout type connu en soi, par exemple d'un diamètre de 10 cm. Ces rouleaux présentent chacun un axe horizontal transversal de rotation, perpendiculaire à l'axe XX' horizontal central, ces axes étant entrainés en rotation par un moyen d'entraînement unique du type chaine ou courroie et ces axes sont séparés les uns des autres d'un pas s de 12 cm par exemple.

Chaque dispositif 1 ou unité (ou module) de soufflage comporte à l'intérieur d'une enceinte 2, un seul ventilateur 3. Ce ventilateur est disposé verticalement de tel sorte que l'axe de rotation des éléments produisant le flux d'air soit vertical, selon un axe VV' vertical. Le flux d'air produit par le ventilateur est un flux radial, c'est-à-dire qu'il s'étend, à la sortie du ventilateur, dans une direction horizontale centripète par rapport à l'axe de rotation du ventilateur.

Ce flux radial est canalisé à l'aide d'un conduit 51 relié au ventilateur 3 et s'étend sensiblement horizontalement et ce conduit 51 alimente six orifices de soufflage 43 en forme d'entonnoir renversé, tous dirigés vers les rouleaux 8 qui supportent et transportent l'élément mince 7.

Entre le ventilateur 3 et les orifices de soufflage 43, sont disposés des moyens de chauffage 6 comportant des résistances électriques en contact avec des ailettes 66 s'étendant verticalement à l'intérieur du conduit 51.

Ces moyens de chauffage 6 sont ainsi supportés par la voute de l'enceinte 2.

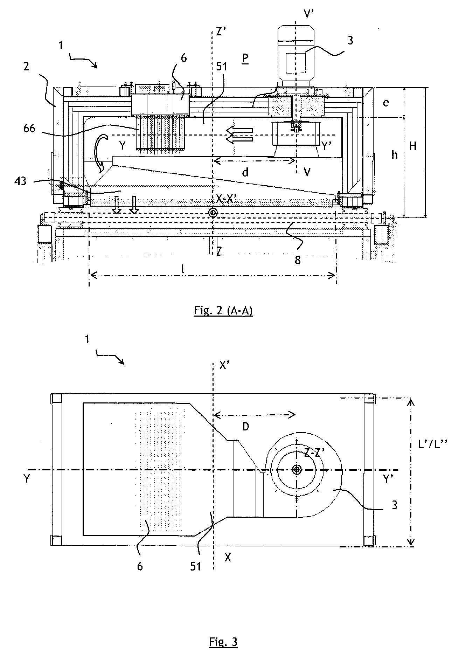

L'orifice de soufflage 43 permet ainsi de réaliser un soufflage d'air chaud sur une largeur de soufflage l ici d'environ 2,4 m, visible sur la figure 2, correspondant sensiblement à 95 % de la largeur intérieure de l'enceinte, cette largeur étant considérée selon un axe YY' transversal horizontal perpendiculaires aux axes XX' et VV',

L'enceinte 2 de chacun des trois dispositifs de soufflage est parallélépipédique et les trois enceintes 2 sont disposés l'une à la suite de l'autre : l'orifice de sortie par lequel l'élément mince 7 sort du premier dispositif de soufflage correspond ainsi à l'orifice d'entrée par lequel l'élément mince 7 entre dans le second dispositif de soufflage en considérant le sens de défilement de l'élément mince à l'intérieur du four et l'orifice de sortie par lequel l'élément mince 7 sort du second dispositif de soufflage correspond ainsi à l'orifice d'entrée par lequel l'élément mince 7 entre dans le troisième dispositif de soufflage en considérant toujours le sens de défilement de l'élément mince à l'intérieur du four.

La paroi de l'enceinte 2 comprend quatre plaques constituées de matériau isolant en fibres céramiques.

Selon le mode de réalisation de l'invention illustré, la limite inférieure de l'enceinte 2 est constituée par l'ensemble des rouleaux 8 qui supportent et transportent l'élément mince 7. Cet ensemble de rouleaux fait ainsi partie de la sole du four.

La hauteur intérieure h de l'enceinte, de l'axe des rouleaux 8 à la face inférieure de la voute est de l'ordre de 1 mètre et l'épaisseur e de la voute est de l'ordre de 30 cm. La hauteur totale de l'enceinte, de l'axe des rouleaux 8 à la face supérieure de la voute est ainsi de l'ordre de 1,3 mètre, ce qui est peu.

La longueur totale du four L est de l'ordre de 5 mètres, chaque dispositif de soufflage présentant une longueur L' d'environ 1,8 mètre pour le premier et le troisième dispositif, et une longueur L" d'environ 1,5 mètre pour le second dispositif.

Chaque dispositif 1 de soufflage comporte un seul ventilateur 3 dans un plan vertical P comprenant l'axe VV' vertical du ventilateur, parallèle à l'axe YY' et perpendiculaire à l'axe XX'.

Comme on peut le voir sur les figures 2 et 3, l'axe vertical VV' du ventilateur est disposé à une distance d ici d'environ 80 cm de l'axe XX' horizontal central, soit à une distance d'un tiers de la largeur de soufflage l.

Cette distance d entre l'axe vertical VV' d'un ventilateur et l'axe XX' horizontal central n'est pas forcément la même pour les trois dispositifs de soufflage, mais elle est toujours comprise entre 25 % et 42,5 % de la largeur de soufflage l.

La largeur de soufflage est ici mesurée dans le plan P comprenant l'axe VV'. Elle est juste légèrement inférieure à la largeur intérieure de l'enceinte qui est ici d'environ 2,5 mètres.

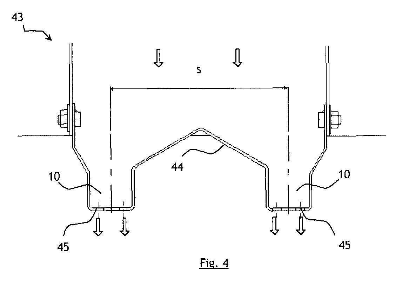

Chaque orifice de soufflage 43 est constitué d'un entonnoir renversé à parois droites dont l'extrémité inférieure est munie de buses 10, ces buses étant disposées deux par deux selon la direction longitudinale du dispositif de soufflage et sont illustrées en détail en figure 4. La distance selon la direction longitudinale entre deux buses est identique au pas s entre les rouleaux 8 et les buses sont d'ailleurs alignées transversalement pour être positionnées exactement au-dessus des rouleaux.

L'orifice de soufflage présente en partie basse, au-dessus des rouleaux 8, une plaque 44 sensiblement en forme de double U en coupe selon l'axe longitudinal du dispositif et pourvue au fond des U de trous 45 présentant chacun un diamètre d'environ 5 mm, afin de permettre au flux d'air de sortir de l'orifice en direction de la face de l'élément mince. La distance selon la direction longitudinale entre les axes verticaux de deux trous 45 adjacents est d'environ 12 mm. La distance entre deux trous adjacents selon la direction transversale est aussi d'environ 12 mm. Comme visible sur la figure 4, les deux U sont reliés par un élément de plaque non pas plat mais en forme de V inversé, afin d'aider au guidage du flux d'air vers les trous.

L'entrée de chaque entonnoir est décalée à l'extrémité latérale de la largeur de soufflage par rapport à l'axe XX' horizontal central.

Les jets de fluide projetés depuis les buses 10 vers l'élément mince 7 sont contenus dans des plans verticaux « transversaux » c'est-à-dire perpendiculaires à l'axe XX' longitudinal horizontal central.

Par ailleurs, les buses 10 peuvent présenter selon la largeur de l'enceinte une zone de recouvrement plus ou moins grande : sur les figures 1 et 2 cette zone de recouvrement est sensiblement égale à toute la largeur de l'enceinte 2 ; cet arrangement est choisi pour garantir une plus grande homogénéité.

Une zone de recouvrement plus petite peut bien entendu être prévue sans sortir du cadre de la présente invention.

Le mouvement général du fluide à l'intérieur de l'enceinte 2 est tel qu'indiqué par les doubles flèches sur les figures 1,2 et 4.

Ce mouvement, dissymétrique par rapport à l'axe ZZ' vertical central de chaque dispositif de soufflage, permet toutefois de réaliser une répartition à la fois optimale et homogène du fluide sur la surface à traiter.

Par ailleurs la disposition des différents constituants, notamment les ventilateurs 3 et les moyens de chauffage 6, assurent un accès fiable facile en cas de réparation et/ou pour l'entretien.

Dans le four de trempe illustré, tous les ventilateurs 3 sont disposés du même côté de l'axe XX' horizontal central.

Lorsque l'enceinte comprend plusieurs ventilateurs 3, il est également envisagé des moyens pour ajuster et contrôler séparément la température et/ou le débit du fluide issu de chacun des ventilateurs. Tout moyen connu en soi peut être utilisé pour cette fonction.

On obtient ainsi des profils de température particuliers et appropriés au niveau du soufflage sur les moyens de transport des éléments minces. Cette modularité est alors très appréciée des utilisateurs.

En outre l'invention a pour objet une unité de soufflage/chauffage comprenant soit un dispositif tel que décrit ci-dessus sur chacune des faces de l'élément mince ; soit un dispositif ci-dessus décrit qui souffle sur une face, associée à un autre moyen de soufflage et/ou de chauffe de type radiatif ou convectif sur l'autre face.

Par ailleurs, il est possible de réaliser un four de traitement thermique avec seulement deux dispositifs ou même avec plus de trois dispositifs de soufflage.

La présente invention permet ainsi de réaliser un four modulaire dont les différents modules (dispositifs de soufflage) peuvent être alignés de manière à ce que leurs axes XX' horizontaux centraux coïncident.

Il pourrait être imaginé de prévoir plusieurs ventilateurs à flux radial à l'intérieur d'un dispositif unique de soufflage, à condition de les positionner le long de l'axe central horizontal de manière à ce qu'un seul ventilateur à flux radial soit disposé dans chaque plan vertical comprenant l'axe vertical du ventilateur et perpendiculaire à l'axe horizontal central.

Toutefois, dans le cadre de l'invention, on préfère prévoir plusieurs dispositifs de soufflage alignés de manière à ce que leurs axes XX' horizontaux centraux coïncident, chaque dispositif de soufflage ne comportant qu'un seul ventilateur à flux radial, ce ventilateur étant le seul disposé dans un plan vertical comprenant l'axe vertical du ventilateur et perpendiculaire à l'axe horizontal central. Avec cette solution, les réglages sont facilités par le fait qu'un flux issu d'un ventilateur ne peut venir perturber le flux issu d'un autre ventilateur à l'intérieur d'un dispositif de soufflage.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Four de trempe comportant plusieurs dispositifs (1) de soufflage d'un fluide sur au moins une face d'un élément mince (7) de type vitrage, les dispositifs comportant, à l'intérieur d'une enceinte (2) ayant un axe (XX') horizontal central correspondant à l'axe central de défilement de l'élément mince (7), un ventilateur (3) à flux radial et à axe (W') vertical ayant une sortie reliée à au moins un conduit (51) alimentant au moins un orifice de soufflage (43) dirigé vers ladite face et réalisant une largeur de soufflage l selon un axe (YY') transversal horizontal perpendiculaires aux axes (XX') et (VV'), les dispositifs étant alignés de manière à ce que leurs axes (XX') horizontaux centraux coïncident, **caractérisé en ce que** chaque dispositif (1) comporte un seul ventilateur (3) dans chaque plan vertical P comprenant l'axe (VV') vertical et perpendiculaire à l'axe (XX') horizontal central, **en ce que** tous les ventilateurs (3) des dispositifs (1) sont disposés du même côté de l'axe (XX') horizontal central commun et **en ce que** l'axe (VV') vertical de chaque ventilateur est disposé à une distance d de l'axe (XX') horizontal central comprise entre 25 % et 42,5 % de cette largeur de soufflage 1.

2. Four de trempe selon la revendication 1, **caractérisé en ce que** l'axe (VV') vertical des ventilateurs (3) est disposé à une distance d de l'axe (XX') horizontal central égal à environ un tiers de la largeur de soufflage l.

3. Four de trempe selon la revendication 1 ou la revendication 2, **caractérisé en ce que** des moyens de chauffage (6) sont disposés dans ledit conduit (51) et sont supportés par la voute de ladite enceinte (2).

4. Four de trempe selon l'une quelconque des revendications précédentes, **caractérisé en ce qu'**il comporte au moins un orifice de soufflage (43) comportant une plaque (44) présentant en coupe selon l'axe (XX') horizontal central sensiblement une forme de double U, cette plaque présentant une pluralité de trous (45) situés au fond des U.

5. Four de trempe selon la revendication précédente, **caractérisé en ce que** les deux U sont reliés par un élément de plaque en forme de V inversé.

6. Procédé de soufflage d'un fluide sur au moins une face d'un élément mince (7) de type vitrage mettant en oeuvre un four de trempe comportant plusieurs dispositifs (1) de soufflage, l'élément mince (7) défilant à l'intérieur d'une enceinte (2) selon un axe (XX') horizontal central, les dispositifs comportant, à l'intérieur de l'enceinte (2) un ventilateur (3) à flux radial et à axe (VV') vertical ayant une sortie reliée à au moins un conduit (51) alimentant au moins un orifice de soufflage (43) dirigé vers ladite face et réalisant une largeur de soufflage l selon un axe (YY') transversal horizontal perpendiculaire aux axes (XX') et (VV'), les dispositifs étants alignés de manière à ce que leurs axes (XX') horizontaux centraux coïncident, **caractérisé en ce que** un seul ventilateur (3) dans chaque plan vertical P comprenant l'axe (VV') vertical et perpendiculaire à l'axe (XX') horizontal central souffle, **en ce que** tous les ventilateurs (3) des dispositifs (1) sont disposés du même côté de l'axe (XX') horizontal central commun et **en ce que** l'axe (VV') vertical de chaque ventilateur est disposé à une distance d de l'axe (XX') horizontal central comprise entre 25 % et 42,5% de cette largeur de soufflage l.

## Claims

1. A toughening furnace comprising several devices (1) for blowing a fluid onto at least one face of a thin glazing element (7), the devices comprising, inside an enclosure (2) having a central horizontal axis (XX') corresponding to the central axis along which the thin element (7) runs, a radial-flow fan (3) of vertical axis (VV') having an outlet connected to at least one duct (51) feeding at least one blowing orifice (43) directed onto said face and providing a blowing width 1 along a horizontal transverse axis (YY') perpendicular to the axes (XX') and (VV'), the devices being aligned so that their central horizontal axes (XX') coincide, **characterized in that** each device (1) includes a single fan (3) in each vertical plane P comprising the vertical axis (VV') and perpendicular to the central horizontal axis (XX'), **in that** all the fans (3) of the devices (1) are placed on the same side of the common central horizontal axis (XX') and **in that** the vertical axis (VV') of each fan is placed at a distance d from the central horizontal axis (XX') which is between 25% and 42.5% of this blowing width 1.

2. The toughening furnace as claimed in claim 1, **characterized in that** the vertical axis (VV') of said fans (3) is placed at a distance d from the central horizontal axis (XX') equal to around one third of the blowing width 1.

3. The toughening furnace as claimed in claim 1 or claim 2, **characterized in that** heating means (6) are placed in said duct (51) and are supported by the roof of said enclosure (2).

4. The toughening furnace as claimed in any one of the preceding claims, **characterized in that** it comprises at least one blowing orifice (43) comprising a plate (44) having, in cross section along the central horizontal axis (XX'), substantially the form of a double U, this plate having a plurality of holes (45) located on the bottom of the Us.

5. The toughening furnace as claimed in the preceding claim, **characterized in that** the two Us are joined by a plate element in the form of an inverted V.

6. A method of blowing a fluid onto at least one face of a thin glazing element (7) employing a toughening furnace comprising several devices (1) for blowing, the thin element (7) running inside an enclosure (2) along a central horizontal axis (XX'), the devices comprising inside the enclosure (2) a radial-flow fan (3) of vertical axis (VV') having an outlet connected to at least one duct (51) feeding at least one blowing orifice (43) directed onto said face and providing a blowing width 1 along a horizontal transverse axis (YY') perpendicular to the axes (XX') and (VV'), the devices being aligned so that their central horizontal axes (XX') coincide, **characterized in that** a single fan (3) in each vertical plane P comprising the vertical axis (VV') and perpendicular to the central horizontal axis (XX') is blowing, **in that** all the fans (3) of the devices (1) are placed on the same side of the common central horizontal axis (XX') and **in that** the vertical axis (VV') of each fan is placed at a distance d from the central horizontal axis (XX') which is between 25% and 42.5% of this blowing width 1.

## Patentansprüche

1. Härteofen, umfassend mehrere Vorrichtungen (1) zum Blasen eines Fluids auf wenigstens eine Seite eines dünnen Elements (7) vom Typ Scheibe, wobei die Vorrichtungen innerhalb eines Raums (2), der eine horizontale Mittelachse (XX'), die der Mittelachse des Vorbeilaufens des dünnen Elements (7) entspricht, aufweist, ein Radialstromgebläse (3) mit vertikaler Achse (VV') umfassen, von dem ein Ausgang mit wenigstens einer Leitung (51) verbunden ist, die wenigstens eine Blasöffnung (43) beaufschlagt, welche zu der genannten Seite hin gerichtet ist und eine Blasbreite 1 entlang einer zu den Achsen (XX') und (VV') senkrecht verlaufenden horizontalen Querachse (YY') bringt, wobei die Vorrichtungen derart ausgerichtet sind, dass ihre horizontalen Mittelachsen (XX') zusammenfallen, **dadurch gekennzeichnet, dass** jede Vorrichtung (1) in jeder vertikalen Ebene P, welche die vertikale Achse (VV') enthält und zu der horizontalen Mittelachse (XX') senkrecht ist, ein einziges Gebläse (3) umfasst, dass alle Gebläse (3) der Vorrichtungen (1) auf der gleichen Seite der gemeinsamen horizontalen Mittelachse (XX') angeordnet sind und dass die vertikale Achse (VV') eines jeden Gebläses in einem Abstand d zwischen 25 % und 42,5 % dieser Blasbreite 1 von der horizontalen Mittelachse (XX') angeordnet ist.

2. Härteofen nach Anspruch 1, **dadurch gekennzeichnet, dass** die vertikale Achse (VV') der Gebläse (3) in einem Abstand d von der horizontalen Mittelachse (XX') angeordnet ist, der gleich etwa einem Drittel der Blasbreite 1 ist.

3. Härteofen nach Anspruch 1 oder Anspruch 2, **dadurch gekennzeichnet, dass** Heizmittel (6) in der Leitung (51) angeordnet sind und durch das Gewölbe des Raums (2) getragen werden.

4. Härteofen nach einem der vorstehenden Ansprüche, **dadurch gekennzeichnet, dass** er wenigstens eine Blasöffnung (43) aufweist, die eine Platte (44) umfasst, welche im Schnitt entlang der horizontalen Mittelachse (XX') im Wesentlichen eine Doppel-U-Form aufweist, wobei diese Platte eine Vielzahl von am Grund des U gelegenen Löchern (45) aufweist.

5. Härteofen nach dem vorstehenden Anspruch, **dadurch gekennzeichnet, dass** die beiden U durch ein Plattenelement mit der Form eines umgekehrten V verbunden sind.

6. Verfahren zum Blasen eines Fluids auf wenigstens eine Seite eines dünnen Elements (7) vom Typ Scheibe, das einen Härteofen mit mehreren Blasvorrichtungen (1) verwendet, wobei das dünne Element (7) innerhalb eines Raums (2) entlang einer horizontalen Mittelachse (XX') vorbeiläuft, wobei die Vorrichtungen innerhalb des Raums (2) ein Radialstromgebläse (3) mit vertikaler Achse (VV`) umfassen, von dem ein Ausgang mit wenigstens einer Leitung (51) verbunden ist, die wenigstens eine Blasöffnung (43) beaufschlagt, welche zu der genannten Seite hin gerichtet ist und eine Blasbreite 1 entlang einer zu den Achsen (XX') und (VV') senkrecht verlaufenden horizontalen Querachse (YY') bringt, wobei die Vorrichtungen derart ausgerichtet sind, dass ihre horizontalen Mittelachsen (XX') zusammenfallen, **dadurch gekennzeichnet, dass** in jeder vertikalen Ebene P, welche die vertikale Achse (VV') enthält und zu der horizontalen Mittelachse (XX') senkrecht ist, ein einziges Gebläse (3) bläst, dass alle Gebläse (3) der Vorrichtungen (1) auf der gleichen Seite der gemeinsamen horizontalen Mittelachse (XX') angeordnet sind und dass die vertikale Achse (VV') eines jeden Gebläses in einem Abstand d zwischen 25 % und 42,5 % dieser Blasbreite 1 von der horizontalen Mittelachse (XX') angeordnet ist.
